# EUROPÄISCHE PATENTANMELDUNG

(11) **EP 4 660 283 A1**
(43) Veröffentlichungstag der Anmeldung: **10.12.2025**
(21) Anmeldenummer: 24020180.6
(22) Anmeldetag: 05.06.2024
(51) Int. Cl.: C10G 1/00, C10G 9/36, C10G 70/06, C07C 7/00, B01D 53/86

(54) **VERFAHREN UND ANLAGE ZUR BEARBEITUNG EINES PYROLYSEÖLS**

(71) Anmelder: Linde GmbH, 82049 Pullach (DE)
(72) Erfinder: SCHÖDEL, Nicole, 82049 Pullach (DE); TOTA, Akos, 82049 Pullach (DE)

(57) **Zusammenfassung**

Es wird ein Verfahren (100) zur Bearbeitung von Pyrolyseöl (1) vorgeschlagen, das das Steamcracken (10) des Pyrolyseöls (1) unter Erhalt eines Spaltgases (2) umfasst, wobei zumindest ein Teil des Spaltgases (2) nacheinander einer Ölfraktionierung (20), einer Wasserwäsche (30) und einer Verdichtung (50) unterworfen wird, und das ferner das Reduzieren eines Gehalts von Cyanwasserstoff in einem oder mehreren, stromab des Steamcrackens (10) gebildeten Stoffströmen (2, 4) umfasst. Eine entsprechende Anlage wird ebenfalls vorgeschlagen.

## Beschreibung

### Gebiet

Die vorliegende Offenbarung betrifft ein Verfahren zur Bearbeitung eines Pyrolyseöls und eine entsprechende Anlage.

### Hintergrund

Verfahren und Anlagen zur Pyrolyse von Plastik, insbesondere sogenanntem Solid Plastic Waste (SPW), sind bekannt. Statt vieler kann beispielsweise auf einen Artikel von B.A. Perez et al., "Characterization of SPW pyrolysis oils: Products spectra and opportunities", in: D. Moscatelli und M. Pelucchi (Hrsg.), "Towards Circular Economy: Closing the Loop with Chemical Recycling of Solid Plastic Waste", Adv. Chem. Eng. 60(1), 169-214, 2022, verwiesen werden.

Die vorliegende Offenbarung bezieht sich insbesondere auf eine Aufarbeitung und Nutzung von flüssigen Pyrolyseprodukten aus einer Plastikpyrolyse, die, wie in der Fachwelt üblich, hier auch als Plastikpyrolyseöl oder kurz Pyrolyseöl bezeichnet werden. Die vorliegende Erfindung ist jedoch nicht auf eine spezifische Art der Gewinnung eines Pyrolyseöls beschränkt.

Pyrolyseöl kann mit weiteren Einsätzen durch Steamcracken bearbeitet werden. Der bisher im Hinblick auf den kommerziellen Einsatz am weitesten verbreitete Ansatz zur Bearbeitung von Pyrolyseöl durch Steamcracken ist das Verdünnen mit konventionellem Einsatz wie Naphtha, atmosphärischem Gasöl (AGO), unhydriertem oder hydriertem Vakuumgasöl ((H)VGO) und anderen Fraktionen, insbesondere aus Raffinerieprozessen. Aufgrund unterschiedlicher Limitierungen können jedoch oft nur geringe Mengen Pyrolyseöl dem konventionellen Einsatz zugesetzt werden, was die Anwendungsmöglichkeiten bzw. Quantitäten bisher stark einschränkt.

Zur Steigerung der Integrationsfähigkeit kann Pyrolyseöl einer Vorbehandlung unterworfen werden, beispielsweise durch destillatives Fraktionieren, Filtrieren, Extrahieren, Adsorbieren oder katalytische Behandlung mit und ohne Wasserstoff, die eine Erhöhung des Anteils des Pyrolyseöl im Einsatz eines Steamcrackers bis hin zur unverdünnten Verarbeitung ermöglichen sollen.

Es besteht weiterhin der Bedarf nach Verbesserungen in Verfahren, in denen entsprechendes Pyrolyseöl durch Steamcracken umgesetzt wird.

### Übersicht

Vor diesem Hintergrund werden ein Verfahren und eine Anlage zur Bearbeitung eines Pyrolyseöls mit den Merkmalen der unabhängigen Ansprüche vorgeschlagen. Ausgestaltungen sind jeweils Gegenstand der abhängigen Ansprüche und der nachfolgenden Beschreibung.

Das vorgeschlagene Verfahren zur Bearbeitung von Pyrolyseöl umfasst das Steamcracken des Pyrolyseöls unter Erhalt eines Komponentengemischs, wobei zumindest ein Teil des Komponentengemischs nacheinander einer Ölfraktionierung, einer Wasserwäsche und einer Verdichtung unterworfen wird, und das Reduzieren eines Gehalts von Cyanwasserstoff in einem oder mehreren, stromab des Steamcrackens gebildeten Stoffströmen.

Der Begriff "Komponentengemisch" wird hier für ein Gemisch an Verbindungen bezeichnet, das, zunächst gasförmig, einem beim Steamcracken verwendeten Spaltofen entnommen wird. Anderenorts wird ein derartiges Gemisch auch als Rohgas oder Spaltrohgas bezeichnet. Dieses Gemisch wird mittels an sich bekannter Verfahrensschritte aufbereitet, wobei ein (aufbereitetes) Spaltgas erhalten wird.

Verfahren und Anlagen zum Steamcracken von Kohlenwasserstoffen sind beispielsweise im Artikel "Ethylene" in Ullmann's Encyclopedia of Industrial Chemistry, Onlineausgabe, 15. April 2009, DOI: 10.1002/14356007.a10_045.pub2, beschrieben, wo auch geeignete Aufbereitungsschritte beschrieben sind. Typischerweise erfolgt dabei in einem ersten Abschnitt (engl. Front-End Section) einer entsprechenden Aufbereitungssequenz eine Entfernung schwerer Verbindungen, falls vorhanden, und danach eine sogenannte Rohgasverdichtung, Sauergasentfernung und Trocknung. Die im Rahmen des vorgeschlagenen Verfahrens und seinen Ausgestaltungen eingesetzte Ölfraktionierung, Wasserwäsche und Verdichtung ist Teil dieses ersten Abschnitts. Nach der Aufbereitung in dem ersten Abschnitt erfolgt eine Fraktionierung, in der durch thermische Trennverfahren unter Einsatz von Ethylen- bzw. C2-Kältemittel und Propylen- bzw. C3-Kältemittel Fraktionen gebildet und bei Bedarf weiter aufgetrennt werden. Zu technischen Details sei ebenfalls auf den erwähnten Artikel, insbesondere die Abschnitte 5.3.2.1, "Front-End Section", und 5.3.2.2, "Hydrocarbon Fractionation Section", verwiesen.

Das vorgeschlagene Verfahren und seine Ausgestaltungen lösen insbesondere ein Problem, das erst kürzlich als relevant erkannt wurde. Abhängig vom Anteil und der Vorbehandlung gelangen durch das Pyrolyseöl, auch nach den eingangs erwähnten Aufbereitungsschritten, nämlich weiterhin Verunreinigungen in den Steamckracker. Diese können dort auch zu neuartigen und unerwarteten Verbindungen umgesetzt werden. Auch der Grad der Bildung und die Art solcher unerwarteten Verbindungen richten sich nach der Vorbehandlung. Hierüber ist bisher wenig bekannt. Insbesondere wurde bei detaillierten Untersuchungen der Anmelderin festgestellt, dass das Spaltgas eines Steamcrackers bei Einsatz von Pyrolyseöl Blausäure bzw. Cyanwasserstoff (HCN) enthalten kann. Ohne weitere Maßnahmen kann sich diese in der Anlage in mehrere Ströme verteilen und dort als hochtoxische und korrosive Verbindung Probleme verursachen.

Durch das vorgeschlagene Verfahren und seine Ausgestaltungen kann auf Basis einer Kombination geeigneter Reinigungsmethoden wie Katalysatoren und Wäschen eine besonders vorteilhafte Entfernung von Cyanwasserstoff in den jeweils relevanten Stoffströmen erzielt werden. Dies betrifft sowohl Effluent- als auch Produktströme. Durch den Einsatz des vorgeschlagenen Verfahrens und seiner Ausgestaltungen kann insbesondere eine saubere bzw. spezifikationsgerechte Abgabe wässriger Stoffströme erreicht werden. Insbesondere im wässrigen Milieu ergibt sich eine Reduktion von Korrosionsrisiken. Dies gilt auch und insbesondere für Wäschen wie eine Laugewäsche und eine zugehörige Laugeaufbereitung. Wird im Zusammenhang mit dem vorgeschlagenen Verfahren und seinen Ausgestaltungen eine Selektivhydrierung durchgeführt, ist bei dieser keine Katalysatorbeeinträchtigung zu befürchten. Schließlich ergibt sich ein reduziertes Risiko der Verunreinigung von Produktströmen bzw. Wertverlusten der Produkte

Bei dem vorgeschlagenen Verfahren und seinen Ausgestaltungen kann bzw. können der eine oder die mehreren Stoffströme ausgewählt sein aus (a) Spaltgas zwischen der Ölwäsche und der Wasserwäsche, (b) Spaltgas auf einer Zwischenstufe der Verdichtung, und (c) beladenem Waschwasser aus der Wasserwäsche. Der Begriff Spaltgas wird dabei für das in dem erläuterten ersten Abschnitt (teil-)aufbereitete Komponentengemisch (Rohgas, Spaltrohgas usw.) verwendet, das beim Steamcracken erhalten wird.

Die jeweils verwendete Alternative (a) bis (c) bzw. entsprechende Kombinationen können je nach dem Gesamtanlagenkonzept und dem Anteil an Verunreinigungen im Einsatz vorteilhaft sein. So kann für die Entfernung von Cyanwasserstoff Alternative (a) besonders erstrebenswert sein, denn hierdurch wird eine Verteilung des Cyanwasserstoffs in stromabwärtige Anlagenteile weitestgehend verhindert. Diese Position stellt jedoch die höchste Anforderung bzgl. Katalysator und Reaktorauswahl (im Hinblick auf Stromführung, Reaktorgröße und Katalysatordeaktivierung), so dass auch Alternativen oder Kombinationen je nach dem Ergebnis einer Gesamtbetrachtung vorteilhaft sein können.

In Ausgestaltungen des hier vorgeschlagenen Verfahrens kann insbesondere vorgesehen sein, dass das Spaltgas auf der Zwischenstufe der Verdichtung einer Kohlendioxidabscheidung unterworfen und danach in die Verdichtung zurückgeführt und dort weiter verdichtet wird.

Die Kohlendioxidabscheidung kann insbesondere eine Laugewäsche umfassen, wobei die Laugewäsche mit einer Laugeausnutzung von 50 bis 80% durchgeführt wird, und/oder wobei eine Ablauge der Laugewäsche unter Verwendung einer Säure neutralisiert wird, welcher vor einer Zuspeisung zur Ablauge in einem vorgegebenen Verhältnis Wasserstoffperoxid zugegeben wird. Auf diese Weise ergibt sich eine besonders effektive Reduzierung des Gehalts von Cyanwasserstoff bzw. wird, wie unten im Detail erläutert, ein Ausgasen von Cyanwasserstoff bei der Neutralisierung der Ablauge verhindert.

Eine hier vorgesehene Cyanwasserstoffentfernung, d.h. Alternative (b) wie zuvor erläutert, kann in bestimmten Fällen ebenfalls besonders vorteilhaft sein. Hierbei kann das Spaltgas insbesondere nach der vierten Stufe eines insgesamt beispielsweise , und ohne die Erfindung hierauf einzuschränken,vier- oder fünfstufigen Spaltgasverdichters gewählt werden. An dieser Stelle kann die Cyanwasserstoffentfernung insbesondere besonders kompakt realisiert werden. Ferner ist an dieser Stelle bereits ein beträchtlicher Teil des Wassers und der potenziellen Katalysatorgifte (Teer, polyzyklische Aromaten, Säuren und andere Oxygenate, usw.) entfernt oder reduziert. Die Reaktionstemperaturen können hier niedriger als in Alternative (a) gewählt werden.

In Ausgestaltungen des hier vorgeschlagenen Verfahrens kann das Reduzieren des Gehalts an Cyanwasserstoff in dem einen oder den mehreren Stoffströmen durch katalytische Umsetzung unter Verwendung eines oder mehrerer Katalysatoren durchgeführt werden. Hierbei können grundsätzlich alle in Betracht kommenden Katalysatoren eingesetzt werden, insbesondere solche, die ein oder mehrere Metalle und ein Trägersystem aufweisen.

Das eine oder die mehreren Metalle kann bzw. können insbesondere aus einem oder mehreren Erdalkalimetallen und/oder einem oder mehreren Übergangsmetallen, insbesondere Natrium, Kalium, Barium, Nickel, Kobalt, Molybdän, Eisen und/oder Zink, ausgewählt sein, und/oder das Trägersystem kann ein oder mehrere Oxide von Titan, Aluminium, Zink und/oder Zirkonium umfassen. Weitere vorteilhafte Ausgestaltungen sind weiter unten im Detail erläutert.

In Ausgestaltungen des hier vorgeschlagenen Verfahrens kann die katalytische Umsetzung bei einer Reaktionstemperatur zwischen 80 und 300 °C und/oder einer Raumgeschwindigkeit zwischen 5.000 und 20.000 Normkubikmetern Gas pro Kubikmeter Katalysator und Stunde durchgeführt werden. Derartige Reaktionsbedingungen haben sich als besonders vorteilhaft erwiesen. Da festgestellt werden konnte, dass in einem Temperaturbereich zwischen 150 und 220 °C der inhibierende Effekt von Wasser besonders gering ist, kann die Reaktionstemperatur insbesondere in einem derartigen Bereich eingestellt werden.

In Ausgestaltungen des hier vorgeschlagenen Verfahrens kann die Reaktionstemperatur zumindest zum Teil unter Verwendung von Verdichtungswärme, sensibler Wärme aus einem Schwerölkreislauf und/oder mittels Wasserdampf bereitgestellter Wärme eingestellt werden, wobei sich, wie unten im Detail erläutert, sich für bestimmte Temperaturbereiche unterschiedliche Wärmequellen besonders eignen und daher in entsprechenden Ausgestaltungen verwendet werden.

In Ausgestaltungen des hier vorgeschlagenen Verfahrens kann insbesondere ein der katalytischen Umsetzung entnommenes Gasgemisch gegen einen der katalytischen Umsetzung zugeführten Einsatz gekühlt werden. Durch einen derartigen Feed-Effluent-Wärmetausch kann insbesondere der Heizbedarf reduziert werden.

Alternativ zu einer katalytischen Umsetzung, oder in Kombination hiermit kann das Reduzieren des Gehalts an Cyanwasserstoff in Ausgestaltungen des hier vorgeschlagenen Verfahrens in dem einen oder den mehreren Stoffströmen unter Verwendung eines oxidativen, komplexierenden und/oder adsorptiven Verfahrens vorgenommen werden. Je nach Gesamtkonzept bzw. den realisierten Alternativen ergeben sich dabei jeweils spezifische Vorteile.

Das Reduzieren des Gehalts von Cyanwasserstoff in dem einem oder den mehreren, stromab des Steamcrackens gebildeten Stoffströmen kann insbesondere unter Verwendung eines mit einer Wabenstruktur ausgestatteten Reaktors, eines Radialstromreaktors und/oder eines Lateral-Flow-Reaktors durchgeführt werden. Hierbei handelt es sich um Reaktoralternativen mit besonders geringem Differenzdruck, die daher besonders vorteilhaft sein können.

Die vorgeschlagene Anlage zur Bearbeitung von Pyrolyseöl weist Mittel auf, die zum Steamcracken des Pyrolyseöls unter Erhalt eines Komponentengemischs, wobei zumindest ein Teil des Komponentengemischs nacheinander einer Ölfraktionierung, einer Wasserwäsche und einer Verdichtung unterworfen wird, und zum Reduzieren eines Gehalts von Cyanwasserstoff in einem oder mehreren, stromab des Steamcrackens gebildeten Stoffströmen eingerichtet ist.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

Entsprechendes gilt auch für eine Anlage, die gemäß einer Ausgestaltung der Erfindung dazu eingerichtet ist, ein Verfahren gemäß einer beliebigen Ausgestaltung der vorliegenden Erfindung durchzuführen.

### Zeichnungen

Ausführungsformen von hier vorgeschlagenen Lösungen werden nachfolgend rein beispielhaft unter Bezugnahme auf die beigefügte Zeichnung beschrieben, wobei
Figur 1 ein Verfahren gemäß einer Ausgestaltung veranschaulicht, und
Figuren 2A bis 2C Reaktoren zur katalytischen Umsetzung veranschaulicht.

### Ausführungsformen

Die nachfolgend beschriebenen Ausführungsformen und Ausgestaltungen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale vorgeschlagener Verfahren und Vorrichtungen nicht abschließend und/oder beschränkend betrachtet werden.

Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Ansprüche oder als Beschränkungen von Äquivalenten hierzu zu betrachten sind, und dass andere Ausführungsformen verwendet und Änderungen vorgenommen werden können, ohne vom Umfang der Ansprüche abzuweichen.

Unterschiedliche Ausführungsformen können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus können andere Ausgestaltungen umfasst sein, die gegenwärtig nicht beansprucht sind, die aber in Zukunft beansprucht werden könnten, insbesondere wenn sie vom Umfang der unabhängigen Ansprüche umfasst sind.

Erläuterungen, die sich auf Vorrichtungen, Apparate, Anordnungen, Systeme usw. gemäß vorgeschlagenen Ausführungsformen beziehen, können auch für Verfahren, Prozesse, Methoden usw. gemäß anderen Ausführungsformen gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

Die nachfolgenden Erläuterungen und Definitionen, die einige Grundlagen der Erfindung betreffen, können für alle oder einen Teil der hier vorgestellten Ausgestaltungen gelten, und die Erläuterung bestimmter Aspekte im Zusammenhang mit nur einem Teil oder einer der Ausgestaltungen soll nicht dahingehend verstanden werden, dass diese Aspekte nicht auch mit anderen oder allen Ausgestaltungen, soweit technisch möglich und sinnvoll, verwirklicht sein können.

Flüssige und gasförmige Stoffströme, Gasgemische oder dergleichen können im hier verwendeten Sprachgebrauch "reich" oder "arm" an einer oder mehreren Komponenten sein, wobei "reich" für einen Gehalt von wenigstens 50%, 75%, 90%, 95%, 99%, 99,5%, 99,9% oder 99,99% und "arm" für einen Gehalt von höchstens 50%, 25%, 10%, 5%, 1%, 0,1% oder 0,01% auf molarer, Gewichts- oder Volumenbasis stehen kann.

Flüssige und gasförmige Stoffströme, Gasgemische oder dergleichen können im hier verwendeten Sprachgebrauch ferner angereichert oder abgereichert an einer oder mehreren Komponenten sein, wobei sich diese Begriffe auf einen Gehalt in einem anderen Stoffstrom beziehen, unter Verwendung dessen der Stoffstrom gebildet wurde. Ein betrachteter Stoffstrom ist dabei "angereichert", wenn er zumindest den 2-fachen, 5-fachen, 10-fachen, 100-fachen oder 1.000-fachen Gehalt der bezeichneten Komponente(n) aufweist, und "abgereichert", wenn er höchstens den 0,5-fachen, 0,1-fachen, 0,01-fachen oder 0,001-fachen Gehalt der bezeichneten Komponente(n) aufweist, jeweils in Bezug auf den Stoffstrom, unter Verwendung dessen der betrachtete Stoffstrom gebildet wurde.

Unter Angaben wie "im Wesentlichen enthaltend" und dergleichen soll hier insbesondere verstanden werden, dass in einer damit beschriebenen Zusammensetzung, einem Stoffstrom usw. neben den als obligatorisch angegebenen bzw. sich aus der Bezeichnung des Gasgemischs (bspw. "Wasserstoff") ergebenden obligatorischen Bestandteilen weitere Komponenten enthalten sein können, sofern sich die wesentlichen Merkmale der damit bezeichneten Zusammensetzung durch diese nicht signifikant ändern. Entsprechendes gilt auch Angaben wie "im Wesentlichen frei von" und dergleichen. Ein "im Wesentlichen" eine oder mehrere Komponenten enthaltendes oder aus diesen bestehendes Gas bzw. Gasgemisch kann insbesondere diese Komponenten zu mehr als 95, 99, 99,9 oder 99,99% in Summe oder als Einzelwerte aufweisen. Umgekehrt ist ein Gas bzw. Gasgemisch "im Wesentlichen frei" von einer oder mehreren Komponenten, wenn es weniger als 5, 1, 0,1 oder 0,01% dieser Komponenten in Summe oder als Einzelwerte enthält.

Sämtliche hier verwendeten Prozentangaben können sich auf Mol-, Mengen- oder Volumenanteile beziehen. Druckangaben in bar sind, soweit nicht anders erläutert, insbesondere als Absolutdrücke zu verstehen.

Die Konjunktion "und/oder" soll, wenn in einer Aufzählung vor dem letzten Begriff der Aufzählung verwendet, so verstanden werden, dass alle in der Aufzählung zuvor und danach genannten Begriffe beliebig miteinander kombiniert werden können. Mit anderen Worten ist mit "A, B und/oder C" "A und/oder B und/oder C" oder "wenigstens eines der Elemente A, B und C in beliebiger Kombination" gemeint.

Ist vorliegend von einem "Teil" eines Stoffstroms die Rede, kann es sich hierbei um einen Mengenanteil mit gleicher Zusammensetzung handeln, der von einem Ausgangsstrom lediglich abgezweigt wurde, aber auch um einen Anteil abweichender Zusammensetzung und ggf. nur eine Komponente des Ausgangsstroms, der mittels eines Verfahrens wie Kondensation, Evaporation, Sieden, Destillieren, Rektifizieren, Absorbieren, Adsorbieren, Flashen, Membrantrennen, Abscheiden oder dergleichen gebildet wird oder bei einem entsprechenden Schritt als Rest verbleibt. Ein "Teil" kann auch nach einer Kombination beliebiger der vorstehend benannten Schritte vorliegen, beispielsweise nach trenntechnischer Bearbeitung abgezweigten Anteils.

Die Aufarbeitung von Plastikabfällen für den Einsatz bei der Pyrolyse kann insbesondere eine Vorbehandlung umfassen, im Zuge derer eine Sortierung, Wäsche und Vorreduzierung von Verunreinigungen erfolgen kann. Bei der sich anschließenden Pyrolyse, die eine thermische und/oder katalytische Pyrolyse, ggf. unter Zusatz von Additiven umfassen kann, können ein Pyrolysegas und das vorliegend insbesondere betrachtete Pyrolyseöl erhalten werden. Ersteres kann einer beliebigen Vorbehandlung unterzogen werden. Letzteres kann insbesondere zunächst einer Aufreinigung unterworfen werden, wobei im Zuge der Aufreinigung beispielsweise eine Filtrierung, eine Entsalzung, eine Destillation, adsorptive und/oder absorptive Verfahren durchgeführt werden können. Neben einer direkten Einspeisung des entsprechend aufgereinigten Pyrolyseöls in einen Steamcracker kann auch eine Hydrierung, beispielsweise in Form einer Hydrodemetallisierung (HDM), eines bekannten Hydrotreating oder eines bekannten Hydrocracking erfolgen.

Abhängig vom Anteil und der Vorbehandlung gelangen aber, wie erwähnt, weiterhin Verunreinigungen in den Steamcracker und werden dort ggf. zu neuartigen Verbindungen umgesetzt. Wie ebenfalls erwähnt, kann hierbei insbesondere Cyanwasserstoff enthalten sein, was ohne zusätzliche Maßnahmen zu einer Verteilung in der Anlage und zu entsprechenden Problemen führen kann.

Cyanwasserstoff entsteht beim Steamcracken aus Vorläuferverbindungen im Pyrolyseöl wie z.B. organischen Nitrilen. Aufgrund der relativ hohen Stabilität von Cyanwasserstoff unter den beim Steamcracken herrschenden Bedingungen (hohe Temperatur, Anwesenheit von Wasserstoff) lässt sich die Bildung nur begrenzt über die Betriebsbedingungen einstellen, sondern diese hängt primär von der Zusammensetzung des Pyrolyseöls ab. Die vollständige Entfernung der Vorläuferkomponenten im Pyrolyseöl ist technisch schwierig und aufwändig.

Sonst in der Petrochemie in ähnlichen Aufgabenbereichen weit verbreitete, rein nach dem Prinzip der physikalischen Adsorption arbeitende Verfahren sind in diesen Pyrolyseölen aufgrund der Vielzahl weiterer Spurenkomponenten, die co-adsorbiert werden können, für die Behandlung größerer Ströme nicht effizient. Hydrierende Verfahren versprechen zwar hohe Entfernungsgrade, benötigen aber auch mehrere Vor- und Nachbehandlungsschritte des Pyrolyseöls und sind deswegen investitions- und/oder betriebskosten intensiv.

Cyanwasserstoff ist eine gasförmige Verbindung, die zu einem gewissen Grad wasserlöslich ist, als sehr schwache Säure aber durch andere Komponenten verdrängt wird. Dadurch verteilt sich Cyanwasserstoff unbehandelt stromab des Spaltofens in der Streamcrackeranlage in unterschiedlichen Strömen.

Nachfolgend werden Ergebnisse aus Pilotversuchen mit einem Pyrolyseöl, das einen Gehalt von ca. 479 ppm (Millionstel Teile) auf Gewichtsbasis Stickstoff aufweist, und das unter Erhalt eines Propylen-Ethylen-Verhältnisses von ca. 0,41 und ca. 0,68 mol/mol gespalten wird ("Fall 1") und einem Pyrolyseöl, das einen Gehalt von ca. 2.079 ppm auf Gewichtsbasis Stickstoff aufweist, und das unter Erhalt eines Propylen-Ethylen-Verhältnisses von ca. 0,61 gespalten wurde ("Fall 2") diskutiert.

In Fall 1 verbleibt von dem gesamten Rohgas aus dem Pilotspaltofen nach der Abscheidung von Kohlenwasserstoffkondensat und wässrigem Kondensat ein Gasanteil von ca. 14 bis 28%. Das Kohlenwasserstoffkondensat macht einen Anteil von ca. 28 bis 32% des gesamten Rohgases aus dem Pilotspaltofen aus, das wässrige Kondensat einen Anteil von ca. 44 bis 55%.

Das Kohlenwasserstoffkondensat, das wässrige Kondensat und der verbleibende Gasanteil weisen in Fall 1 typischerweise die nachfolgenden Gehalte an bestimmten Verbindungen auf (die ppm-Angaben beziehen sich in den Kondensaten jeweils auf Gewichtsanteile, im verbleibenden Gasanteil auf Volumenanteile):
Kohlenwasserstoffkondensat:
   - Cyanwasserstoff ca. 80 bis 120 ppm
   - Nitrile ca. 90 bis 130 ppm
   - Pyrrole und Pyridin ca. 60 ppm
Wässriges Kondensat:
   - Cyanwasserstoff ca. 12 bis 17 ppm
   - Ammoniak ca. 30 ppm
Verbleibender Gasanteil:
   - Cyanwasserstoff ca. 80 bis 120 ppm
   - Ammoniak unterhalb von ca. 1 ppm
   - Stickstoffmonoxid unterhalb von ca. 0,01 ppm

In Fall 2 verbleibt dagegen von dem gesamten Rohgas aus dem Pilotsplatofen nach der Abscheidung von Kohlenwasserstoffkondensat und wässrigem Kondensat ein Gasanteil von ca. 35%. Das Kohlenwasserstoffkondensat macht einen Anteil von ca. 35% des gesamten Rohgases aus dem Pilotspaltofen aus, das wässrige Kondensat einen Anteil von ca. 30%.

Das Kohlenwasserstoffkondensat, das wässrige Kondensat und der verbleibende Gasanteil weisen in Fall 2 typischerweise die nachfolgenden Gehalte an bestimmten Verbindungen auf (die ppm-Angaben beziehen sich in den Kondensaten jeweils auf Gewichtsanteile, im verbleibenden Gasanteil auf Volumenanteile):
Kohlenwasserstoffkondensat:
   - Cyanwasserstoff ca. 1 ppm
   - Nitrile ca. 250 ppm
   - Pyrrole und Pyridin ca. 50 ppm
Wässriges Kondensat:
   - Cyanwasserstoff ca. 15 ppm
   - Ammoniak ca. 40 ppm
Verbleibender Gasanteil:
   - Cyanwasserstoff ca. 140 ppm
   - Ammoniak unterhalb von ca. 1 ppm
   - Stickstoffmonoxid unterhalb von 0,01 ppm

Zur Überwindung der erläuterten Nachteile werden nunmehr Maßnahmen vorgeschlagen, die sich zur gezielten Reinigung und Entfernung von Cyanwasserstoff aus Komponentengemischen aus einem Steamcracker bzw. hiervon abgeleiteten Stoffströmen, die aus einer Spaltung von Einsätzen die zumindest (Plastik-)Pyrolyseöle enthalten oder vollständig aus solchen bestehen, besonders eignen.

Alternativen bzw. Ausgestaltungen eines vorgeschlagenen Verfahrens können eine Hydrolyse von Cyanwasserstoff im Rohproduktgasstrom bei erhöhten Temperaturen mittels eines geeigneten Katalysators (z.B. auf Basis von metalldotiertem Titanoxid) vor einer Kondensation des im Rohspaltgas enthaltenen Wassers, eine Behandlung der wässrigen Kondensate vor Übergabe in eine übliche Abwasserreinigung mittels oxidierender Methoden (z.B. unter Verwendung von Wasserstoffperoxid und optional Eisen, Kupfer und dergleichen, oder unter Verwendung von Ozon oder Chlorbleichlauge), mittels Komplexierung oder lonenaustausch, ggf. auch nach Strippung, oder eine Hydrolyse vorhandener Cyanwasserstoffanteile in der Gasphase vor einer Laugewäsche mittels eines geeigneten Katalysators (z.B. auf Basis metalldotiertem Titanoxid) oder eines Adsorbens umfassen. Kombinationen dieser Alternativen sind möglich.

Alternativen bzw. Ausgestaltungen eines vorgeschlagenen Verfahrens können ferner eine angepasste Fahrweise der Laugewäsche mit reduzierter Laugeausnutzung von beispielsweise weniger als 85% und oxidierender Behandlung eines Ablaugestromes, eine Behandlung mittels Mitteldruckoxidation (MP-WAO) oder eine Spurenentfernung von Cyanwasserstoffspuren mittels Adsorbens nach der Laugewäsche (vor der Hydrierung) umfassen.

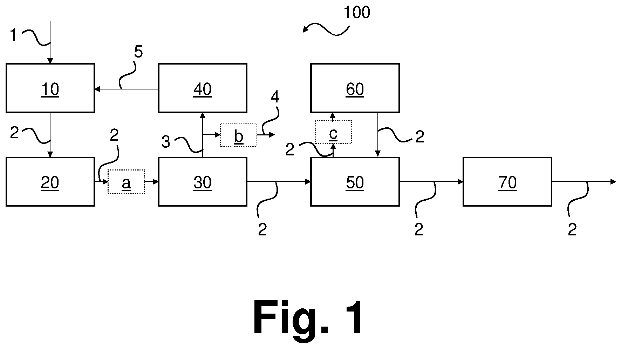

In Figur 1 ist ein Verfahren gemäß einer hier vorgeschlagenen Ausgestaltung veranschaulicht und insgesamt mit 100 bezeichnet. Das Verfahren umfasst einen Steamcrackingschritt 10 dem ein Pyrolyseöl enthaltender Einsatz 1 zugeführt wird, und in dem ein Rohspaltgas bzw. Komponentengemisch 2 erhalten wird. Das Komponentengemisch 2 wird einer Ölfraktionierung 20 unterworfen, der ein an schweren Komponenten abgereichertes, weiter mit 2 bezeichnetes Spaltgas entnommen wird. Dieses wird, ggf. nach einer katalytischen Entfernung von Cyanwasserstoff wie oben zu Alternative (a) erläutert und in Figur 1 mit a veranschaulicht, einer Wasserwäsche 30 zugeführt.

Aus der Wasserwäsche ausgeführtes Prozesswasser 3 kann in ein Prozessdampfsystem 40 eingespeist werden, das Prozessdampf 5 erzeugt, welcher dem Dampfspaltschritt 10 zugeführt werden kann. Ein Teil des Prozesswassers 2 kann, wie oben zu Alternative (b) erläutert und in Figur 1 mit b veranschaulicht, einer Entfernung von Cyanwasserstoff unterworfen werden.

Nach der Wasserwäsche verbleibt ein Spaltgas, das weiter mit 2 bezeichnet ist und einer Spaltgasverdichtung 50 unterworfen wird. Aus dieser kann auf einer Zwischenstufe teilverdichtetes Spaltgas ausgeführt werden. Dieses wird, ggf. nach einer Entfernung von Cyanwasserstoff wie oben zu Alternative (c) erläutert und in Figur 1 mit c veranschaulicht, einer Laugewäsche 60 zugeführt. Entsprechend behandeltes Spaltgas, in Figur 1 weiter mit 2 bezeichnet, wird in die Spaltgasverdichtung 50 zurückgeführt, dort weiter verdichtet, und anschließend einer Vorkühlung und Trocknung 70 unterworfen.

Das gekühlte und getrocknete Spaltgas, in Figur 1 weiter mit 2 bezeichnet, kann einer nicht veranschaulichten Fraktionierung unterworfen werden.

In der spezifischen Ausgestaltung können jeweils nur Teile des Konzepts, z.B. nur eine katalytische Front-End-Oxidation bzw. Hydrolyse gemäß Alternative (a), eine Behandlung des Waschwassers mit Katalysator vor der Laugewäsche gemäß Alternative (b) mit Behandlung des Waschwassers und/oder eine optimierte Laugewäsche gemäß Alternative (c) realisiert werden. Dies richtet sich, wie erwähnt, nach dem Gesamtanlagenkonzept und dem Anteil an Verunreinigungen im Einsatz.

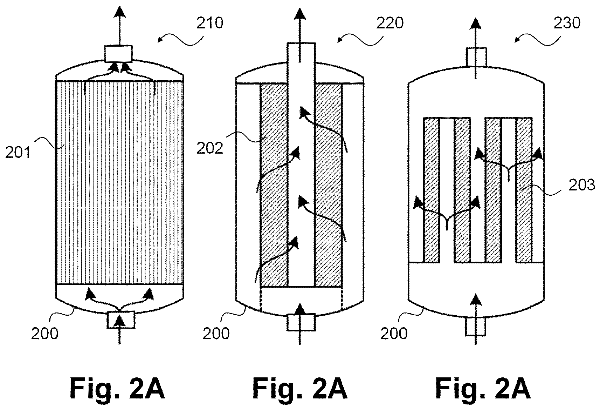

Wie erwähnt, können für eine katalytische Entfernung von Cyanwasserstoff insbesondere Anordnungen mit einem niedrigen Differenzdruck vorteilhaft sein, wie sie in Beispielen in den Figuren 2A, 2B und 2C veranschaulicht ist.

In Figur 2A ist dabei ein Reaktor 210 veranschaulicht, der eine Wabenstruktur 201 aufweist. Figur 2B veranschaulicht einen Radialstromreaktor 220, der in einem Bereich 202 mit Katalysator ausgestattet ist, und der radial durchströmt wird. Figur 3B veranschaulicht einen Lateral-Flow-Reaktor 230, der in einem Bereich 203 mit Katalysator ausgestattet ist, und der lateral durchströmt wird. Ein Reaktorbehälter ist in den Figuren 2A bis 2C jeweils mit 200 angegeben.

Besonders geeignete Katalysatoren sind beispielsweise mit Alkali- oder Erdalkalimetallen wie Natrium, Kalium, Barium etc. dotierte Katalysatoren und/oder Übergangsmetalle wie Nickel, Cobalt, Molybdän, Eisen, Indium etc. enthaltende Katalysatoren. Trägersysteme wie Titandioxid, Dialuminiumtrioxid, Zinkoxid, oder Zirkoniumoxid oder Kombinationen hiervon.

Die verwendeten Reaktionstemperaturen liegen je topologischer Anordnung zwischen 80 und 300 °C, die Raumgeschwindigkeit bei 5.000 bis 20.000 Normkubikmeter Gas pro Kubikmeter Katalysator und Stunde. Das inhibierende Effekt des Wassers kann, durch die gezielte Wahl des Temperaturfensters in einem Bereich von 150 bis 220 °C minimiert werden. Zur Einstellung der benötigten Reaktortemperatur kann in einem Bereich bis 200 °C je nach Position des Reaktors, die Verdichtungswärme und/oder die sensible Wärme aus einem Schwerölkreis für das Anwärmen des Gasstromes genutzt werden. Um höhere Reaktortemperaturen zu erzielen (bis zu 300 °C) kann das Einsatzgas bzw. Spaltgas gegen Wasserdampf erhitzt werden.

Für die Minimierung des Heizbedarfs kann die Vorwärmung des Spaltgases gegen den Reaktoreffluent in einem vorgeschalteten Wärmeübertrager vorgesehen sein. Diese ist aber nicht zwingend notwendig.

Besonders vorteilhaft für die Entfernung von Cyanwasserstoff ist in bestimmten Fällen Alternative (a), denn hierdurch eine Verteilung des Cyanwasserstoffs in weitere Anlagenteile weitestgehend verhindert werden kann. Diese Position stellt jedoch, wie erwähnt, die höchste Anforderung bzgl. Katalysator und Reaktorauswahl und letztendlich der Wirtschaftlichkeit dar. Auf die obigen Ausführungen wird verwiesen.

Zur Einstellung der benötigten Reaktortemperatur kann in einem Bereich bis 200 °C die sensible Warme aus dem Schwerölkreis für das Anwärmen des Gasstromes genutzt werden. Um höhere Reaktortemperaturen zu erzielen (bis zu 300 °C) kann das Einsatzgas bzw. Spaltgas insbesondere gegen Wasserdampf erhitzt werden.

Für die Minimierung des Heizbedarfs kann die Vorwärmung des Spaltgases gegen den Reaktoreffluent in einem vorgeschalteten Wärmeübertrager vorgesehen sein. Diese ist aber nicht zwingend notwendig.

Die Alternativen (b) bzw. (c) sind insbesondere in Kombination einsetzbar und umfassen eine partielle Entfernung von Cyanwasserstoff aus dem Spaltgas in Kontakt mit dem Prozesswasser in der Waschwasserkolonne, d.h. Alternative (b), und eine nachfolgende katalytische Umsetzung des im Spaltgas verbleibenden Cyanwasserstoffs gemäß Alternative (c). vorsieht.

Besonders geeignet für Alternative (c) ist der Austritt der vierten Stufe des Spaltgasverdichters, denn hier der Reaktor kompakter gebaut werden kann und bereits ein Großteil des Wassers und der potenziellen Katalysatorgifte (Teer, polyzyklische Aromaten, Sauren und andere Oxygenate, usw.) entfernt oder reduziert wurden. Reaktionstemperaturen könne hier niedriger als gemäß Alternative (a) gewählt werden.

Bis zu einer benötigten Reaktoreintrittstemperatur von 100 bis 105 °C ist gemäß Alternative (c) generell die Verdichtungswarme ausreichend. Für die Einstellung der Eintrittstemperatur im Bereich 100 bis 200 °C kann das Spaltgas in einem Feed-Effluent-Wärmetauscher vorgewärmt und zudem Wärme aus dem Schwerölkreis genutzt werden. Das an Cyanwasserstoff befreite Spaltgas kann dann zunächst gegen den Feedstrom und dann weiter gegen Kühlwasser gekühlt und nach Abscheidung des Kondensats in die Laugewäsche geführt werden.

Die Absorption von Cyanwasserstoff im Prozesswasser ist abhängig von mehreren Faktoren (Temperatur, pH-Wert, lonenstärke, etc.). Unter normalen Prozessbedingungen wird erwartet, dass sich der größte Teil des gelösten Cyanwasserstoff ausgestrippt und in der üblichen Verschaltung wieder vor die Waschwasserkolonne geführt wird. Dies führt zu einer Aufkonzentrierung des Cyanwasserstoffs in der Kolonne. Um dies zu minimieren, kann in den hier vorgeschlagenen Ausgestaltungen das Strippgas insbesondere weiter abwärts nahe der Saugseite der ersten Stufe des Spaltgasverdichters zurückgeführt werden.

Der im Prozesswasser enthaltene Cyanwasserstoff und weitere Metall-Cyanid-Komplexe können mit der Abschlämmung ausgeschleust werden. Aufgrund ihrer potenziellen Toxizität auf Organismen sind die Cyanid-Grenzwerte für Industrieabwasser sehr gering und liegen typischerweise bei unter 1 mg/L. Für die Entfernung von Cyaniden aus Abwasser sind zahlreiche Verfahren bekannt (Oxidation mit Sauerstoff, Wasserstoffperoxid, Ozon oder Chlorbleichlauge, Adsorption/lonenaustausch, Komplexierung/Ausfällung/Flockung oder Kombinationen hiervon, bzw. die genannten Methoden nach vorheriger Strippung) und sind grundsätzlich aus dem Stand der Technik bekannt.

Im Rahmen von hier vorgeschlagenen Ausgestaltungen kann das Prinzip der Komplexierung durch Zudosieren von Eisensulphat zum Prozesswasser gezielt eingesetzt werden, um Cyanwasserstoff in Form von Ferrocyaniden auszufällen (und durch Filtration zu entfernen). Dies Schritt ermöglicht es zudem, die Korrosion im Prozesswasserkreis zu minimieren, die stromab eingesetzte katalytische/adsorptive Entfernung zu entlasten und auf diese Weise die Kosten zu optimieren.

In einer weiteren Ausgestaltung des Verfahrens kann auf die katalytische Entfernung des nach der Wasserquenchkolonne im Spaltgas verbleibenden Cyanwasserstoffs verzichtet werden, wobei dieser Tatsache dann mit einem entsprechend angepassten Betrieb der Laugekolonne Rechnung getragen werden kann. Um die Absorption und Verbleib von Cyanwasserstoff in der zirkulierenden Lauge zu begünstigen, kann der in der Ablauge verbleibende "freie" Gehalt an Lauge, beispielsweise Natriumhydroxid, erhöht werden. Dabei kann in entsprechenden Ausgestaltungen die Laugeausnutzung entsprechend von 85% auf einen Wert von 50 bis 80% reduziert werden, um besonders niedrige Cyanwasserstoffgehalte von typischerweise weniger als 1 ppm auf Gewichtsbasis im erhaltenen Spaltgas zu erzielen.

In der Ablauge gelöstes Natriumcyanid und Metallkomplexe können unter typischen Bedingungen der Niederdruck-Ablaugeoxidation nur unvollständig zu Cyanaten werden. Bei der Neutralisation mit Säure, beispielsweise Schwefelsäure, würde Cyanwasserstoff ausgasen bzw. die neutralisierte Ablauge die Abgabespezifikation nicht erfüllen. Die Oxydationskinetik kann daher durch Erhöhung der Temperatur z.B. in der Mitteldruck-Ablaugeoxidation (190 bis 250 °C) beschleunigt werden, wodurch sich niedrige Restcyanidgehalte ergeben.

Bevorzugt wird hier ein im Sinne dieser Ausgestaltung modifizierter Neutralisationsprozess eingesetzt, in dem der Säure, beispielsweise der Schwefelsäure, noch vor dem Eintritt in die Neutralisationsbehälter Wassersstoffperoxid in einem Verhältnis von beispielsweise ca. 3 zu 1 (Schwefelsäure zu Wasserstoffperoxid) zugeführt wird. Mit der dabei entstehenden Peroxomonoschwefelsaure (Carosche Säure) werden die in der Ablaugeoxidation nicht umgesetzten Cyanide und Thiocyanate bei einer pH-Wert von 9 bis 10 in einem Temperaturbereich von 20 bis 60 °C oxidiert.

Besondere Vorteile dieses Verfahrens sind die niedrige Prozesstemperatur, kurze Verweilzeit und die Oxydation von Thiosulphaten, Sulfiten und Kohlenwasserstoffen. Die Behandlung der beiden Abwasserströme (Ablauge und Prozesswasser) kann natürlich am gemeinsamen / kombinierten Strom mit einem geeigneten Verfahren (Oxidation (mit Sauerstoff, Wasserstoffperoxid, Ozon, Chlorbleichlauge, Carosche Säure), Adsorption/lonenaustausch, Komplexierung/Ausfällung/Flockung oder ihre Kombination) erfolgen.

Laugewäschen in einer Ethylenanlage neigen unter bestimmten Bedingungen zum Schäumen, was zu einem Slip von Sauergasen und auch von Cyanwasserstoff führen kann. Cyanwasserstoff wird im Spaltgastrockener nicht adsorbiert. Um die Acetylen-Hydrierkatalysatoren zu schützen, können speziell für ungesättigte Ströme entwickelte Alumina-Zeolith-Hybridadsorbentien eingesetzt werden. Der Präferierte Einsatzbereich liegt hierbei bei -40 bis 60 °C.

## Patentansprüche

1. Verfahren (100) zur Bearbeitung von Pyrolyseöl (1), das umfasst:
Steamcracken (10) des Pyrolyseöls (1) unter Erhalt eines Spaltgases (2), wobei zumindest ein Teil des Spaltgases (2) nacheinander einer Ölfraktionierung (20), einer Wasserwäsche (30) und einer Verdichtung (50) unterworfen wird; und
Reduzieren eines Gehalts von Cyanwasserstoff in einem oder mehreren, stromab des Steamcrackens (10) gebildeten Stoffströmen (2, 4).

2. Verfahren (100) nach Anspruch 1, wobei
der eine oder die mehreren Stoffströme (2, 4) ausgewählt ist oder sind aus:
(a) Spaltgas (2) zwischen der Ölwäsche (20) und der Wasserwäsche (30);
(b) Spaltgas (2) auf einer Zwischenstufe der Verdichtung (50); und
(c) beladenem Waschwasser (4) aus der Wasserwäsche (30).

3. Verfahren (100) nach Anspruch 1 oder 2,
wobei das Spaltgas (2) auf der Zwischenstufe der Verdichtung (50) einer Kohlendioxidabscheidung (60) unterworfen und danach in die Verdichtung (50) zurückgeführt und dort weiter verdichtet wird.

4. Verfahren (100) nach Anspruch 3,
wobei die Kohlendioxidabscheidung (60) eine Laugewäsche umfasst
wobei die Laugewäsche mit einer Laugeausnutzung von 50 bis 80% durchgeführt wird, und/oder
wobei eine Ablauge der Laugewäsche unter Verwendung einer Säure neutralisiert wird, welcher vor einer Zuspeisung zur Ablauge in einem vorgegebenen Verhältnis Wasserstoffperoxid zugegeben wird.

5. Verfahren (100) nach einem der vorstehenden Ansprüche,
wobei das Reduzieren des Gehalts an Cyanwasserstoff in dem einen oder den mehreren Stoffströmen (2, 4) durch katalytische Umsetzung unter Verwendung eines oder mehrerer Katalysatoren durchgeführt wird.

6. Verfahren (100) nach Anspruch 5,
wobei der eine oder die mehreren Katalysatoren ein oder mehrere Metalle und ein Trägersystem aufweist oder aufweisen.

7. Verfahren (100) nach Anspruch 6,
wobei das eine oder die mehreren Metalle aus einem oder mehreren Erdalkalimetallen und/oder einem oder mehreren Übergangsmetallen, insbesondere Natrium, Kalium, Barium, Nickel, Kobalt, Molybdän, Eisen und/oder Zink, ausgewählt ist oder sind, und/oder wobei das Trägersystem ein oder mehrere Oxide von Titan, Aluminium, Zink und/oder Zirkonium umfasst.

8. Verfahren (100) nach einem der Ansprüche 5 bis 7,
wobei die katalytische Umsetzung bei einer Reaktionstemperatur zwischen 80 und 300 °C und/oder einer Raumgeschwindigkeit zwischen 5.000 und 20.000 Normkubikmetern Gas pro Kubikmeter Katalysator und Stunde durchgeführt wird.

9. Verfahren (100) nach Anspruch 7,
wobei die Reaktionstemperatur zwischen 150 und 220 °C liegt.

10. Verfahren (100) nach Anspruch 7 oder 8,
wobei die Reaktionstemperatur zumindest zum Teil unter Verwendung von Verdichtungswärme, sensibler Wärme aus einem Schwerölkreislauf und/oder mittels Wasserdampf bereitgestellter Wärme eingestellt wird.

11. Verfahren (100) nach einem der vorstehenden Ansprüche,
wobei ein der katalytischen Umsetzung entnommenes Gasgemisch gegen einen der katalytischen Umsetzung zugeführten Einsatz gekühlt wird.

12. Verfahren (100) nach einem der vorstehenden Ansprüche, wobei
das Reduzieren des Gehalts an Cyanwasserstoff in dem einen oder den mehreren Stoffströmen (2, 4) unter Verwendung eines oxidativen, komplexierenden und/oder adsorptiven Verfahrens vorgenommen wird.

13. Verfahren (100) nach einem der vorstehenden Ansprüche, wobei
das Reduzieren des Gehalts von Cyanwasserstoff in dem einem oder den mehreren, stromab des Steamcrackens (10) gebildeten Stoffströmen (2, 4) unter Verwendung eines mit einer Wabenstruktur (201) ausgestatteten Reaktors (210), eines Radialstromreaktors (220) und/oder eines Lateral-Flow-Reaktors (230) durchgeführt wird.

14. Anlage zur Bearbeitung von Pyrolyseöl (1), die Mittel aufweist, die zur Durchführung der folgenden Schritte eingerichtet sind:
Steamcracken (10) des Pyrolyseöls (1) unter Erhalt eines Spaltgases (2), wobei zumindest ein Teil des Spaltgases (2) nacheinander einer Ölfraktionierung (20), einer Wasserwäsche (30) und einer Verdichtung (50) unterworfen wird; und
Reduzieren eines Gehalts von Cyanwasserstoff in einem oder mehreren, stromab des Steamcrackens (10) gebildeten Stoffströmen (2, 4).

15. Anlage nach Anspruch 14,
wobei die Anlage Mittel aufweist, die zur Durchführung eines Verfahrens (100) nach einem der Ansprüche 2 bis 13 eingerichtet sind.
